# EUROPEAN PATENT APPLICATION

(11) **EP 4 660 922 A1**
(43) Date of publication of application: **10.12.2025**
(21) Application number: 25180579.2
(22) Date of filing: 03.06.2025
(51) Int. Cl.: G06Q 30/0601, G06Q 20/22, G06F 21/10, H04L 9/00

(54) **PROCESSING AND DISTRIBUTING A DISTRIBUTION SCHEME**

(30) Priority: 06.06.2024 NL 2037868
(71) Applicant: Roederer Management B.V., 1016 HG Amsterdam (NL)
(72) Inventor: ROEDERER, Etienne Georges, 1016 HG Amsterdam (NL)
(74) Representative: Nederlandsch Octrooibureau

(57) **Abstract**

This disclosure describes a method for processing and distributing a distribution scheme. The method begins with a token creator creating an initial token that contains distribution rules. This initial token is then digitally signed by the token creator, forming a signed initial token. The method continues for a counter 'i' in the range 1 to 'n' inclusive, where 'n' can be any integer greater than or equal to 1. If 'i' equals 1, the signed initial token is provided to the first receiver. If 'i' is greater than 1, the signed (i-1)-th active token is provided to the i-th receiver. The i-th receiver then adds their data to the signed initial token or the signed (i-1)th active token, forming an i-th active token. This i-th active token is then digitally signed by the i-th receiver, forming a signed i-th active token. A token qualifier adds qualifying event data to the signed m-th active token, where 'm' can be any integer with 1<=m<=n, forming a qualifying token. This qualifying token is then digitally signed, forming a signed qualifying token. The method includes verifying the signatures of the token creator, the receiver, and the token qualifier. If the signatures are verified, the distribution rules are executed. These distribution rules determine a reward for the first to m-th receivers based on their order relative to the initial token and/or to the qualifying token. The disclosure also relates to a computer program product and a system.

## Description

### Field of the disclosure

The disclosure relates to a method for processing and distributing a distribution scheme. It also relates to a system and computer program product.

### Background of the disclosure

The digital marketing landscape has evolved significantly over the years, incorporating *a wide array of strategies including search engine optimization, content marketing, and* influencer marketing, among others. A critical component of this ecosystem involves compensation schemes where marketers, such as influencers or affiliate marketers, are rewarded for promoting products or services and driving consumer actions like sales or clicks. These schemes are pivotal in leveraging personal networks and recommendations, which are often influential in consumer purchase decisions.

Despite the potential of these marketing strategies, several barriers hinder their effectiveness and accessibility. For marketers, challenges such as the time investment required to find willing companies, and the administrative burdens associated with registering as a freelancer or company, can outweigh the benefits of participation without significant scale. Furthermore, traditional compensation mechanisms, such as voucher codes or referral links, offer limited flexibility and are often constrained to rewarding a small number of participants in the marketing chain. This limitation not only restricts the potential reach and impact of marketing campaigns but also fails to fully leverage the power of network effects in digital marketing.

Moreover, while token-based technologies and blockchain have been proposed as solutions to enhance the traceability and efficiency of marketing schemes, their adoption in mainstream digital marketing remains limited. Blockchain technology, characterized by its immutability, distributed ledger, and secure encryption, offers significant advantages in terms of security and transparency.
However, its features such as decentralization and the restriction against double spending do not necessarily align with the goals of marketing schemes, which benefit from the exponential sharing of campaign information. Additionally, the use of tokens as a carrier of value introduces complexities related to currency conversion and value fluctuation, further complicating their integration into marketing strategies.

In light of these challenges, there exists a need for an innovative approach that overcomes the limitations of current digital marketing compensation schemes and token-based technologies. Specifically, a solution that simplifies the participation process for marketers, enhances the flexibility and reach of compensation mechanisms, and leverages the benefits of blockchain technology without its drawbacks, would represent a significant advancement in the field of digital marketing.

### Summary of the disclosure

The disclosure provides a computer-implemented method for processing and distributing a distribution scheme, comprising:
- creating, for example by a token creator, an initial token comprising distribution rules;
- digitally signing the token, forming a signed initial token;
- for counter i in the range 1 to n inclusive, where n can be any integer greater than or equal to 1, the method further comprises
   ∘ providing the signed initial token, if i=1, or the signed (i-1)-th active token, if i>1, to an i-th receiver;
   ∘ adding, by the i-th receiver, i-th receiver data to the signed initial token or the signed (i-1)th active token forming an i-th active token;
   ∘ digitally signing, by the i-th receiver, the i-th active token forming a signed i- th active token;
- adding, for example by a token qualifier, qualifying event data to the signed m-th active token, where m can be any integer with 1<=m<=n forming a qualifying token;
- digitally signing the qualifying token forming a signed qualifying token;
- verifying the token creator signature, the receiver signature, and the token qualifier signature;
- in case the signatures are verified, executing the distribution rules,
- wherein the distribution rules determine a reward for the first to m receivers based on their order relative to the initial token and/or to the qualifying token.

The iteration over counter i, with i in the range 1 to n, means that there can be one or multiple participants (called "receivers" herein) in the scheme between the token creator and the token qualifier. That means that receiver i can just give a copy of the token to receiver i+1 and be included in the chain. Even if receiver i does nothing else, but one of "downstream" receivers i+1, i+2, ... i+n does, then receiver I might still be eligible, under the distribution rules, for a reward. This scheme fits in well with current internet trends, wherein many consumers learn about new marketing campaigns not directly from the source of the campaign (the token creator) but from intermediaries such as influencers or other online contacts. These influencers or online contacts act then as "upstream receivers" from the perspective of the consumer, and are potentially rewarded if the consumer (or someone "downstream" from the consumer) performs a qualifying event such as a purchase of a good or service according the distribution rules as setup by the token creator.

In an embodiment, the process of providing the signed token to receivers comprises duplicating the token. Duplicating the token, rather than transferring ownership, has the effect that the sender retains their token while a new instance is created for the receiver with updated transaction data.

In an embodiment, the process of signing the qualifying token comprises duplicating the token rather than changing the previous token. This has the effect that the holder retains their token while a new instance is created with updated qualifying event data.

In an embodiment, the verification of the integrity of a token's transaction history is performed by validating signed transactions records stored within the token itself. This obviates the need for a distributed consensus mechanism, such as a distributed ledger.

In an embodiment, there are at least 2 or at least 3 receivers or at least 4 receivers (that is, i runs in the range 2 to n or 3 to n or 4 to n). In an embodiment that can be combined with the earlier embodiment, the number of n is limited to a maximum number, for example to 3, to 4, or to any number in the range 5-10. In such a combined scheme, example maximum possible ranges of i include 1-10, 2-10, 3-10, 4-10, 1-9, 2-9, 3-9, 4-9, 1-8, 2-8, 3-8, 4-8, 1-7, 2-7, 3-7, 4-7, 1-6, 2-6, 3-6, 4-6, 1-5, 2-5, 3-5, and 4-5. By putting a lower limit on the range, receivers are encouraged to share the token so as to reach the minimal number of receivers to be eligible. By putting an upper limit on the range, receivers may perceive that the token has more value, since it cannot be shared indefinitely.

This method allows for a secure and transparent way to track participation and reward distribution in a marketing campaign, employing the benefits of elements of blockchain technology for immutability and cryptographic security without its limitations.

In an embodiment of the disclosure, the distribution rules determine a reward for only the (n-p)-th to n-th receiver, where p is smaller than n. This allows for targeted rewarding of participants based on their position in the distribution chain, offering flexibility in how rewards are allocated and potentially incentivizing later participants.

In an embodiment of the disclosure, the distribution rules determine a reward for only the first to q-th receivers, where q is smaller than n. This variation focuses rewards on early participants, encouraging rapid dissemination of the token to maximize reach and impact.

In an embodiment of the disclosure, the first i-th token is stored on a device of the i-th receiver, for any i in the range 1 to n inclusive. This ensures that each participant has a record of their involvement, enhancing the traceability and verification of the distribution process.

In an embodiment of the disclosure, digitally signing the token comprises creating a cryptographic hash of information in the token. This enhances the security and integrity of the token at each stage of the distribution, ensuring that the data cannot be tampered with without detection.

In an embodiment of the disclosure, the initial token comprises a reference to a dataset in a database, and in a further embodiment, this dataset is encrypted using a private key. The integrity of the dataset can be verified using a corresponding public key, adding an additional layer of security and trust to the system.

In an embodiment of the disclosure, the qualifying token comprises transaction data from the distribution chain including receivers in the distribution chain that are subject to the distribution rules as defined in the initial token. This ensures that the qualifying event can be securely and uniquely linked to the relevant participants and tokens.

In an embodiment of the disclosure, peripheral data is associated with the token, providing additional context or descriptive information beneficial to parties within the system. This could include descriptive data about the campaign initiator, tags describing the product or service, or links to additional information, enhancing the utility and user experience of the system.

In an embodiment of the disclosure, the token is embedded within carrier data, which serves a purpose unrelated to the function of the token but facilitates its distribution. This innovative approach allows for the seamless integration of the token into various types of digital content, expanding the potential channels for distribution and engagement. In an embodiment, the carrier data comprises multimedia content, software applications, or any digital content that triggers the transfer of the token as a secondary effect.

In an embodiment, executing the distribution rules comprises generating, by a token payout processor, payout data and associating the payout data with the first qualifying token, thereby creating a payout token. In an embodiment, the payout data includes at least one of: a confirmation of conditions met for distribution, a delay parameter accounting for possible disputes, or instructions for the automated processing of distributions.

In an embodiment, the information in the token is encrypted using a private key of the token creator, and the integrity and authenticity of the token can be verified using a corresponding public key. In an embodiment, the method comprises storing a cryptographic hash of the transaction data and qualifying event data in at least one administrator database, allowing for verification of the integrity and authenticity of the data contained within the token.

The disclosure further provides computer program products and a system configured to perform the method, ensuring that the innovative approach can be implemented efficiently and effectively across various devices and platforms. This comprehensive solution addresses the limitations of existing digital marketing compensation schemes and token-based technologies, offering a flexible, secure, and user-friendly system for incentivizing and rewarding participation in marketing campaigns.

The method and system disclosed herein offer significant advantages over existing digital marketing and distribution schemes by providing a flexible, secure, and efficient means of managing and distributing tokens. By leveraging digital signatures, cryptographic hashing, and smart distribution rules, the system ensures the integrity, security, and automated execution of distribution schemes, overcoming limitations in prior art digital marketing and distribution schemes.

The disclosure provides methods for creating compensation schemes that are capable of incentivising all system participants for distributing, re-selling, recommending, or marketing a product or service. The method utilises a smart contract that contains distributions information, transaction data containing the recipients of the distributions, qualifying event (purchase) data and participant compensation instructions.

The disclosure comprises a transferable token containing (A) crypto-graphically secured campaign data with flexible reward scheme parameters, cryptographically secured transaction data and (C) the data required to confirm the occurrence of a qualifying event under the reward scheme. The disclosure uses elements of blockchain technology, but unlike applications in e.g. cryptocurrencies, the transaction data forms an integral part of the token.

(A) An initial participant sets the campaign data, including the parameters for rewarding participants in the scheme. The campaign data is cryptographically secured. (B) As the token propagates between participants in the system, the transaction details contained within each instance of the token are updated in a new token in a manner that means the token contains the required information to be able to execute the reward scheme. This transaction data is cryptographically secured. (C) When a qualifying event occurs, the event is confirmed using a signature protocol, creating a token that contains all data necessary for the execution of the reward scheme.

The disclosure can deal with complex reward and distribution schemes, provides a secure and reliable way to track the participation in such schemes and to reward participants. It uses certain concepts that are common in blockchain technology to ensure an immutable and cryptographically secure record of reward scheme parameters and participants. The method by which the token proliferates and updates through a system of participants to reflect the way each participant relates to the reward scheme makes it uniquely suitable to execute complex distribution schemes.

### Brief description of the Figures

Embodiments of the present disclosure will be described hereinafter, by way of example only, with reference to the accompanying drawings which are schematic in nature and therefore not necessarily drawn to scale. Furthermore, like reference signs in the drawings relate to like elements.

The attached figures illustrate various aspects of the disclosure, wherein:
Figure 1 schematically represents a token in accordance with the preferred embodiment of the disclosure.
Figure 2 schematically represents the propagation and transfer of a token through the system in accordance with a variant of the preferred embodiment of the disclosure.
Figure 3a and 3b schematically represent the levels of tokens and users within a system.
Figure 4 schematically represents the data content evolution within a token.
Figure 5a and 5b schematically represent the role of the transaction data in a system, for an embodiment containing the minimal transaction data.
Figure 6 schematically represents a simplified schematic depiction of the participants in the system along with their technical capabilities.
Figure 7 schematically represents a simplified schematic depiction of the participants in the system along with their key roles in the system.

### Detailed description

In this disclosure, the word token is used to describe a set of information represented in a digital format, or in a format that can be converted to a digital format. The token may contain a combination of static data and non-static data. The token consists of multiple sub-sets of data that may represent information regarding, for example, campaign information, user information, transaction information regarding the transfer of tokens between users, information regarding purchases by users, payment instructions or other information depending on the function of the token.

The token and the information contained therein might be converted to different formats to aid the transfer or storage of such information. For example, a token or a pointer to a stored version of a token, could be converted to a QR code to allow sharing between mobile devices. All the data in the token might be stored or transferred together or in parts, for example, an identifier of a token might be transferred between devices and might point to a token or part of a token that is stored on a third device.

Within this disclosure, static data or frozen data refers to a part of the information contained on a token and remains static after a moment determined by an action within the system. Such an action could be, for example, a confirmation by a participant in the system or when certain conditions are met (the data is "frozen"). If a token is transferred between users or if a token is appended to a chain of associated tokens, static data does not change. Once data is required to remain static, it can be cryptographically secured, allowing a participant in the system to verify that the data has indeed remained unchanged since it was frozen.

An illustrative example would be a token containing information regarding a campaign, such as (but not limited to) the scope of the campaign, an identifier, the seller and a distribution mechanism describing discounts or rewards. In this example, after a token is transferred between multiple participants in the system, it is important for the functioning of the system that the campaign data remains static (and verifiably so) for all tokens held by participants who are downstream from the moment the campaign was frozen.

Within this disclosure, non-static data refers to a set or subset of information contained on a token that might change when an event occurs within the system. An illustrative example would be: if a token were to contain information regarding a number of previous holders of the token or previous participants in the chain (for example, the token holds the information on who the last i users were in the chain before the holder). This set of information might change when a token is transferred and propagated within the system. For example, a new holder might be appended to the section containing this information, or if the number of holders contained in the token is limited to i, the holder that is i+1 steps behind the current holder might be removed.

It is possible for data to be non-static throughout a certain part of the system and to become static after a certain condition is met. For example, if a token transfers through a chain of n users, and the last user in the chain converts the token at a qualifying event (e.g. a purchase), the aforementioned transaction or previous holder data might be frozen and become static.

It is also possible for a static record or copy to be held of a set of data that remains non-static within the system. For example, a record of a token containing the information regarding the last n transactions might be stored at a separate location (in its entirety or as a cryptographic hash) in order to be able to verify the validity of this data at a certain point in the system.

In order to intuitively describe the process by which data contained in a token propagates through the system, the words transfer and transaction are used in this disclosure. In certain blockchain applications, such as cryptocurrencies, a transaction implies that the value reflected by a token is transferred from one user to another.

In the system described in this disclosure, the mechanism by which token information propagates between users is not through an actual transfer or redesignation of the token from one user to the next. In this system, the original token remains with the sender and new token is created for the receiver that contains duplicates of certain parts of the information contained in the previous token, while updating other parts to reflect the new state of the token after the new participant is added to the chain. The token held by the initial holder is still held by or attributed to this holder. As such, the use of the word transfer within this disclosure does not necessarily refer to a transfer of value or of a unique token, rather to a duplication and propagation of selected parts of the token data in the form of a newly created token.

Existing blockchain-based token systems typically focus on token transfers where ownership changes from one user to another through consensus-validated transactions. In contrast, this disclosure presents embodiments with a different approach where tokens proliferate through duplication rather than transfer, allowing each participant to maintain their token while creating new instances for downstream participants or upon the execution of the smart contract. This distinction enables advantages, for example: a single token can be used multiple times as the basis for the execution of the smart contract or reward scheme, and the same token can continue to proliferate even after qualifying events occur at any point in the distribution chain. This allows reward schemes to be executed at any node in the proliferation network without terminating the token's further propagation and value creation.

A transfer might occur through any of a number of routes, including for example through a network or directly between devices and might utilise any number of protocols or methods such as via a messenger application, a social media application, a device readable QR code, a Bluetooth-based transfer protocol or any other common method for the transfer of data between devices.

Reference is made within this disclosure to signing and signatures. When reference is made to signing a certain set of data or when reference is made to a signature, these words refer to a signing protocol that is considered adequately secure for the data that it signs. In most practical instances this will be a public key cryptography protocol commonly used in blockchain technology.

Within this disclosure reference is made to identifiers or IDs in relation to tokens, campaigns, users, purchases or qualifying events, payout instances or to other elements of the token or the disclosure. In most embodiments, an identifier will have the form of a unique code, sequence of alphanumeric characters or other type of information in digital form that uniquely identifies each instance of the token.

A distinct identifier will be used in most embodiments of the disclosure for practical purposes. In the example of the token, a token contains information in other sections that are unique to that instance of the token (for example, a combination of campaign identifier, holder ID and the latest transaction timestamp). It is possible for each token to be identified without a distinct identifier on the basis of a combination of unique data. Though most embodiments will use a distinct identifier, a combination of unique data or a transformed combination thereof could theoretically and practically act as an identifier.

For example, a token with campaign ID 123 which is held by user John and was created at 00:01 on 1 January 2024 might be, for practical purposes, uniquely identified as 123John000101012024, however it might be more practical to append a distinct unique identifier code (for example, a randomly generated code).

References to identifier should be considered in the broadest sense of the word, they could refer to a distinct code, or to a means of identification that may be used to identify an item or object in a unique fashion without the use of a distinct identifier.

This disclosure refers to devices. For the purposes of this disclosure, a device is to be interpreted as any electronic device that may perform one or multiple functions within the implementation of the system, including for example the storage, transmission and processing of data in electronic, electromagnetic, optical or other format. Devices might include but are not limited to cell phones, smart phones, laptop computers, desktop computers, servers or payments terminals. When an action as described below is said to be performed by a participant in the system, it is to be interpreted that it is executed by a program or set of code controlled by that participant through their device or devices.

This disclosure refers to the storage of data. Where reference is made to the storage of data by participants in the system, this should be understood to include any form of storage that can be attributed to or accessed by the relevant participant. Such storage might occur on a device belonging to a participant, but might also occur on a device associated with another participant in the system such as an administrator or other user, or on a third-party storage device such as a cloud server.

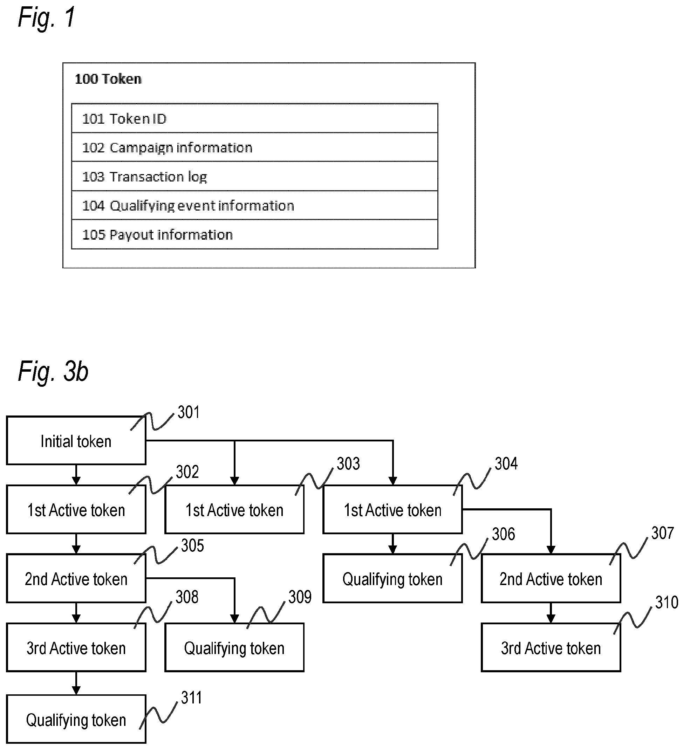

Figure 1 provides a detailed view of a token 100, which is central to the disclosure. The token 100 comprises several key components: a unique tokenID 101, campaign information 102, a transaction log 103, qualifying event information 104, and payout information 105. The tokenID 101 serves as a unique identifier for each token, ensuring that each instance can be distinctly recognized and traced throughout the system. The campaign information 102 includes details about the marketing or distribution campaign to which the token is related, such as the campaign's objectives, duration, and the rewards or incentives offered. The transaction log 103 records the history of transfers or transactions involving the token, providing a traceable path of its movement through the system. Qualifying event information 104 captures details about specific actions or conditions that qualify for rewards or other outcomes as defined by the campaign. Finally, the payout information 105 details the execution of any rewards or distributions triggered by qualifying events, including the timing and recipients of such payouts. This comprehensive structure of the token enables a secure, transparent, and efficient mechanism for managing and tracking participation in marketing or distribution campaigns.

As such, figure 1 represents a schematic depiction of a token in accordance with the preferred embodiment of the disclosure. A token contains at least campaign data, transaction data and data relating to a qualifying event, each will be described in more detail. The transaction data and qualifying event data might be empty or part empty in certain tokens that are in early stages in the propagation stage.

In an embodiment of the disclosure, a token further contains a header containing an identifier and data relating to payout or distribution instructions.

Certain embodiments might include other static or non-static data, such as descriptors or tags that can be added by users to describe the product, service or seller/initiator of the campaign.

In the preferred embodiment of the disclosure, the token contains a header that contains at least one unique token identifier (ID or token ID), bearing in mind the description and scope of the definition of an identifier set out earlier in this disclosure.

In certain embodiments, the token could contain other data in a header section that might aid specific functions of the token in within a system. Such data could include, but is not limited to, one or more of the following: a version number or code describing the format or other details of the token, a hash of part of the data or all of the data within the token (which might be duplicated and stored in a separate location to verify immutability), or other information that might be useful to describe or govern the functioning of the token within the system.

The token contains information relating to the campaign details (campaign data). The campaign data includes an identifier of the campaign, at least one or multiple distribution rules of the campaign and a cryptographic hash of a set of data that includes the part of the campaign data that is required to execute the distribution rule.

Distribution rules can apply to all members of the token chain and can further refer to parties outside the token chain. The disclosure is not limited to distribution to the first n distributors of the of the token and/or the purchaser, such as is the case in traditional voucher systems and certain other token-based or blockchain based systems. In certain embodiments, the content of the campaign data could refer to parties outside the chain, as long as the distribution rules contain an identifier of the beneficiary of the rule and a description of the reward.

As a non-limiting example: a retailer acting as an initiator in the system could set a distribution rule that stipulates that, at the event of a qualifying transaction, a reward is paid to a supplier. Even if this supplier is not or has not been a holder of a token within the system.

An embodiment will contain distribution rules that provide for rewards to one or multiple of the following: A re-seller or initial influencer: someone who is the first party to receive the token from the initiator. This is not limited to what would be considered professional influencers or re-sellers, in could include "regular" consumers who receive a token from a company website or advert. It but could also include e.g. staff members employed by the initiator to reward referrals by staff members or a distribution channel for a certain service or product.
- A subsequent re-seller or influencer: the second up to the n-th party in the chain might be eligible to receive a reward.
- The purchaser: a discount or cash back reward might be offered to the purchaser, the user who conducts the qualifying purchase or executes the qualifying event.
- The last referrer: the party who transferred the token to the purchaser.
- The one-before or n-before last referrer: the party who transferred the token to the last referrer or is n steps earlier in the chain, the inclusion of several layers before the purchaser might encourage users to share their tokens due to the exponential nature of the potential reward.
- External parties: parties who are not part of the chain of tokens leading from the initiator to the purchaser. Such parties could include for example suppliers who receive a share of the sale of a product upon purchase by a consumer, external intermediaries or agents involved in bringing initiators and re-sellers together, administrators of the system, etc.

Existing solutions generally limit distribution rewards to a fixed number of participants, often focusing solely on the initial participant(s) or the final participants(s). These systems lack the flexibility to reward intermediate participants based on their relative position in the distribution chain, which fails to incentivize the exponential network effects that modern digital marketing requires.

In certain embodiments, campaign data might also include other information including but not limited to the initiator/seller of the campaign, the perimeter of the campaign (e.g. if it relates to certain products or services) and key dates such as the start of the campaign or the end of the campaign (which might be defined by one or multiple of the last date for token transfer and the last date for token redemption / qualifying events under the campaign).

A campaign is not limited to one set of distribution rules, it might contain multiple sets of rules that, for example, govern multiple perimeters within the campaign. Certain embodiments might contain distribution rules that reward participants with a percentage of the value of the qualifying purchase, other embodiments might reward participants with fixed monetary rewards, other embodiments might reward certain participants with non-monetary rewards, such as a free product or service. Campaign rules might also contain restrictions governing the transfer of tokens or the functioning of the system in a broader sense, for example they might dictate that a participant may not receive multiple tokens within the same chain.

The token contains information relating to the transaction details (transaction data). The transaction data consists of information on one or multiple transactions that are part of the chain leading up to that token which is held by the user of that token. The minimum requirement is for the token to contain information regarding the latest transaction in the chain, which is the transaction that led to the token being held by the holder of that token. In the preferred embodiment, the transaction data within a token contains identifiers for all the holders in the chain that are subject to the distribution rule. In such an embodiment the token itself contains all information required to execute the distribution rule once the qualifying event (usually a purchase) parameters are known. Transaction data could also contain additional data that is helpful for the execution of a certain embodiment of the disclosure, such as a counter that depicts the number of proliferation-steps a token is removed from the initial token.

A minimum requirement for the system to function is for the transaction data to contain an identifier (as set out elsewhere in this disclosure), an identifier of the previous token in the chain, an identifier of the recipient and a hash of the transaction data from the previous token. A cryptographic hash of each token's transaction data is stored on that token, which means each token contains a cryptographic hash of its own transaction data and of the previous token's transaction data, thereby achieving cryptographic linking.

Unlike most blockchain solutions, the transaction data that impacts the beneficiaries of the distribution rule forms an integral part of the token. This differs from traditional token systems that validate transaction and store transaction data separately from the token itself (often in a distributed ledger). This novel approach enables each token to contain all information necessary to execute distribution rules autonomously upon the occurrence of a qualifying event, without requiring access to an external (distributed) ledger for verification of the distribution chain. The duplication-based proliferation method ensures that qualifying events can occur at multiple points within the network while the original tokens continue to propagate, creating an ecosystem suitable for exponential propagation of tokens.

At each new instance of a token, the elements which are frozen are hashed and these cryptographic hashes are stored in at least one third-party location. The integrity of this frozen data can then be verified by comparing the hash to the version stored at the third-party location.

A hash of the campaign data is stored at both the initiator of the campaign (in the form of the initial token) and the third-party location. In an embodiment, for any token within the system, the campaign data is valid if the cryptographic hash of the campaign data on the token matches the hash of the campaign data on the initial token, which is stored at the initiator and at the third-party.

A hash of the transaction data of each token and a hash of the previous token's transaction are stored with the third-party. This allows the third-party to verify all chains of tokens: if the cryptographic hash of the previous token's transaction data on any token in the chain does not match the centrally stored transaction data of the transaction data on that previous token in the chain, the transaction data in that chain will be determined to be invalid.

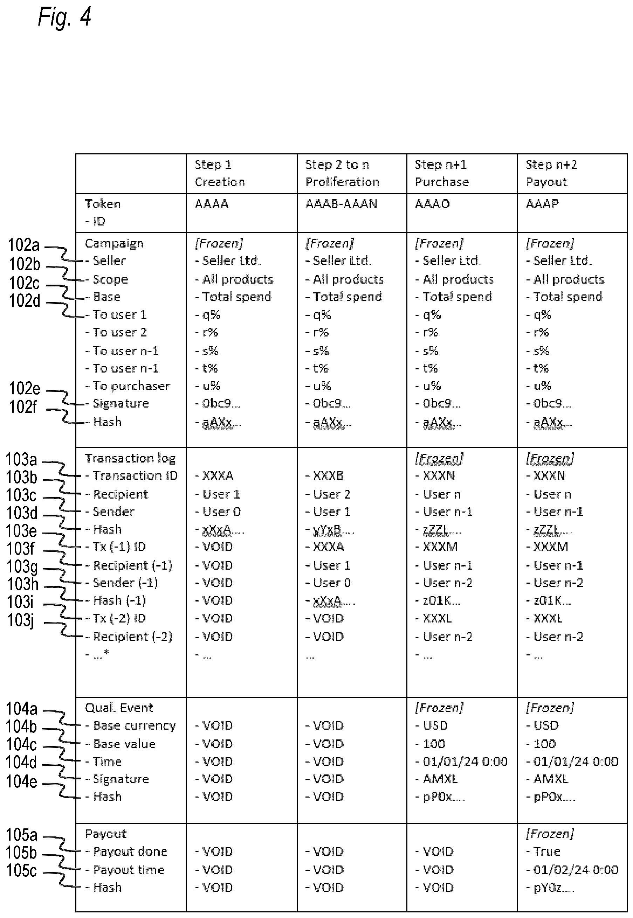

The preferred embodiment is for the transaction data within the token to contain all the transaction data relating to the transactions whereby the recipient in such a transaction is a beneficiary of the distribution mechanism. By way of non-limiting example, the campaign depicted in figure 4 provides a reward for the first distributer of the token after the initiator (user 1), to the second distributor of the token after the initiator (user 2), to the purchaser (user n), to the user preceding the purchaser (user n-1) and the user preceding user n-1 (user n-2). In such an example, the transaction data within the token might contain information for multiple transactions rather than the minimum requirement of one.

The token contains information relating to the qualifying event details (for example, purchase data). When the token reaches a user that performs a qualifying event, a branch of the proliferation tree will be closed. The occurrence of a qualifying event does not mean that a token from which the qualifying event originated can no longer be transferred to another user, or that the token is precluded from use in multiple events/purchases. When a qualifying event takes place, a new instance of a token is created without rendering the previous token invalid in a similar process that that occurs when a token undergoes a transaction between two users. I.e. a new token is created, containing a subset data of the previous token and appending new data. The old token continues to exist.

The minimum information required in the case of a qualifying event is a binary confirmation that the event occurred. A signature will be appended by the party authorised to confirm such an event (the signature in itself could be the binary confirmation that the event occurred) , in most instances this is the seller, but it could be an administrator or another objective party that is not a beneficiary of the reward scheme.

Such a simple confirmation would be sufficient for the functioning of the disclosure in an embodiment where, for example, the campaign distribution rule includes a simple monetary reward for one or several users at the occurrence of a qualifying event (e.g. if a purchase occurs in excess of value 1,000, parties X, Y and Z receive 1 each). In this case, if the seller confirms and signs off on the fact that the purchase over value 1,000 occurred, the distribution is validated.

In most embodiments it would be desirable to add additional information to the qualifying event or purchase segment of the token. The non-limiting example in figure 4 depicts purchase data that contains a base currency, a base value, a time, a signature and a hash of the purchase data. This example depicts a distribution rule where several users receive percentages of a base purchase value, hence the inclusion of the value and currency. The purchase date and time might be included.

In certain embodiments the token might contain data that does not aid the functioning of the disclosure, but that might provide further context, descriptive or other information that might be beneficial for a party in their use of the token. Such data might be static or non-static. By means of non-limited example, such data might include descriptive data regarding the initiator of the campaign (e.g. an address, a company website, descriptions, tags, etc). Such data might, for example, be used to filter or sort tokens in a database. An example might be where an initiator of a campaign is a restaurant, the token might contain tags such as "Restaurant", "Romantic", "New York", "Italian cuisine"). Such data might be included in useful form within the token, or in the form of a link or some other form of identifier that might guide the user obtain the information in some other way. Such data will be referred to as "Peripheral data".

In certain embodiments, the token might be embedded as part of a larger set of information that can be processed for a purpose unrelated to the function of the disclosure. As an example, such a set of information might allow a device or a piece of hardware to produce audio or visual outputs or to execute a video game, in such a case, the consumption of this information (e.g. playing a piece of music, playing a video, playing or downloading a game, or utilising the information for whatever its purpose may be) might qualify as a qualifying event.

In such an example, the transfer or distribution of the token might take place as a consequence of the transfer of the unrelated set of information.

For example, a user, re-seller, marketer or other participant in the system might transfer a file containing data representing a video game. The token might be appended to this data and act as a mechanism to distribute rewards to parties responsible in the proliferation of the video game. In such a case, the primary reason for the party to transfer the data to another party would be the transfer of the video game, and the transfer of the token would be a secondary effect that acts to register a distribution rule associated with this video game.

Such data as described in this paragraph, which is not linked to the functioning of the disclosure directly or indirectly, but which might be supplemented with a token for the purpose of determining a distribution rule, will be referred to as "Carrier data".

In certain embodiments the token might contain payout data. Payout data would aid in the (automated) processing of the distributions included in the tokens. For example, in certain embodiments campaign parameters might include a delay in distributions, to account for the possible disputes because of an event, such as a return or malfunction of a product that was part of the qualifying event. A return of a product might nullify the qualifying event. In such an instance, the token might include a confirmation that all requirements have been met and have become irreversible. Other conditions or parameters influencing distributions might be included in the campaign data, and confirmations or relevant data regarding these conditions might be included in the payout data.

Multiple methods could be employed to ensure the distributions are fulfilled according to the campaign parameters, including but not limited to: a seller might be instructed to transfer the amounts due in distributions to a custodian account when a purchase occurs, or payments for the purchase might be executed by a third party administrator who might split payments at the source.

In some embodiments such data or parts of this data might be considered part of the purchase data and might be appended simultaneously with the purchase data, in other embodiments it might be modified or appended after the purchase data has been frozen and could be considered a distinct set of data within the token.

The system consists of three main types of participants: initiator users (usually sellers or providers of services), non-initiator users (including re-sellers, influencers, consumers, any other users) and an administrator. Each participant acts through a device, capable of storage, processing and communicating data. Each type of participant might access the system through a multitude of devices and may consist of more than one person or actor who may have rights or access to perform all or a subset of the functions associated with a role. Storage and processing might take place in multiple locations on multiple devices and duplicate functions may be performed to enhance security, continuity, or system stability.

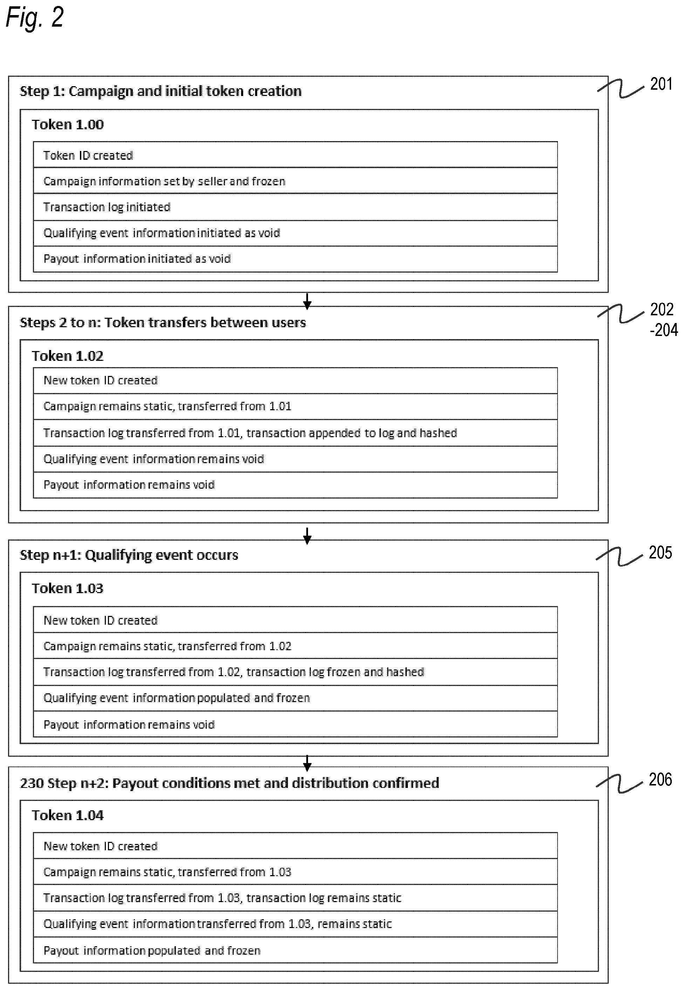

Figure 2 illustrates the process of token propagation and transfer within the system, showcasing the dynamic nature of the token as it moves from one participant to another. Beginning with step 201, a campaign is initiated, and an initial token is created (by a token creator, who can be an initiator user and/or an administrator participant) with a new tokenlD, frozen campaign information, and initiated (but void) transaction log, qualifying event information, and payout information. As the token is transferred between users (receivers) in steps 202 to 204, a new tokenlD is generated for each transfer, the campaign information remains unchanged (static), the transaction log is appended and hashed, and the qualifying event and payout information remain void. This process continues until a qualifying event occurs at step 205, at which point the transaction log is frozen and hashed, and the qualifying event information is populated and also frozen. The token then transitions to a payout token at step 206 when payout conditions are met, with the payout information populated and frozen, completing the cycle of token evolution within the system.

Initiator users (token creators) can set campaign data and initiate token proliferation chains within the system. They can transfer initial tokens to other users in the chain. An indicative depiction of this role is Step 1 in figure 2. Initiator users may or may not be restricted in other functions, but they are differentiated from non- initiator users by being able to perform this step. Initiator users might store tokens or parts of token (including, but not limited to identifiers) on a device associated with that user. Initiator users and devices associated with them might perform processing functions on tokens, such as the transfer of tokens.

Non-initiator users (receivers) are, at minimum, able to receive and send tokens (Steps 202-204 in figure 2). In other words, they can sit on either side of a transaction for all tokens except the initial token (where they cannot be a sender). As the holder of a token where a qualifying event occurs, they are able to take on the role of the purchaser or the user that triggers the qualifying event (Step 205 in figure 2). Non-initiator users might store tokens or parts of token (including, but not limited to identifiers) on a device associated with that user. Non-initiator users and devices associated with them might perform processing functions on tokens, such as the transfer of tokens. Since the definition of a non-initiator user gives them less rights than an initiator user and does not preclude an initiator user from having all the rights held by non-initiator users, it is theoretically possible to have a functioning system that contains initiator users but no non-initiator users.

Administrator users perform central functions within the system, such as the storage and verification of tokens or parts of tokens. They can act as token qualifiers. They can also be responsible for implementing the consequences of the distribution rules after a qualifying event has occurred. The minimum role of the administrator is to verify the validity of any elements within a token that have been frozen and cryptographically hashed. E.g. comparing the cryptographic hash of the campaign data on the initial token with that on any token further down the chain will allow verification of the content of the campaign on such token. The administrator acts as an arbiter and can verify the validity of hashes of static data throughout the system. In certain embodiments the administrator user will organise and/or backup the storage of data such as tokens, and will administer the access rights of users, the creation of new users, etc.

Characteristics of the disclosure that differentiate it from existing methods, whereby existing methods might contain a subset of these characteristics, include:
- The ability to handle distribution rules that apply to all parties in a chain or any subset thereof, between the initiator and the party performing the qualifying event, as opposed to being limited to a number of users at the beginning or end of the chain.
- The transaction data that contains the beneficiaries/participants in the reward scheme is an integral part of the token. Meaning that each token contains all the information required to execute the distribution rule.
- The ability to append to tokens or for tokens to be appended to a theoretically unlimited set of data that might perform any function within the system or not-directly associated with the system.

The disclosure has certain benefits of blockchain technology (e.g. immutability and verification thereof of contract and transaction data), without the necessity to apply characteristics that are unnecessary (e.g. distributed consensus, decentralised control, the restriction of double spending). In particular, the consensus mechanisms in traditional blockchain systems impose unnecessary computational overhead that do not serve the core objectives of marketing distribution schemes.

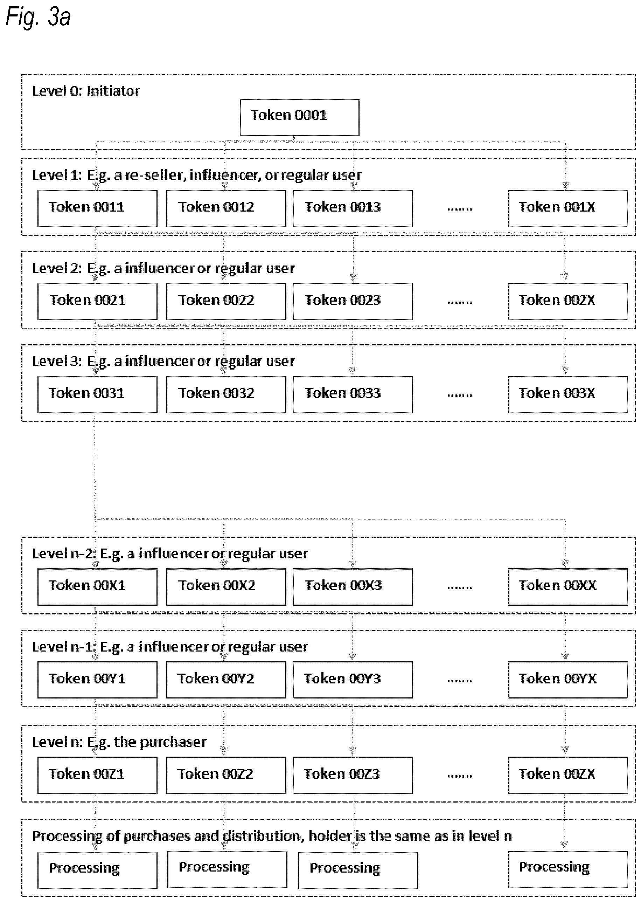

Figure 3a depicts the hierarchical structure of tokens and users within the system, from the initiator at level 0 through various intermediary levels (e.g., re-sellers, influencers, or regular users) down to the purchaser at level n. This structure highlights the multi-tiered nature of the system, where tokens can pass through multiple hands, each potentially eligible for rewards based on the campaign's distribution rules. The processing of purchases and distribution at the purchaser level underscores the system's capability to manage complex transactions and reward distributions efficiently.

Figure 3b depicts an alternative view of the hierarchical structure of tokens within the system. In this illustrative example, an initial token 301 is sent to three different users (receivers), becoming respective first active tokens 302, 303, and 304. The first user (receiver), the holder of token 302, sends it to another user (a 2^{nd} receiver), who then holds second active token 305. That user also sent his/her second active token 305 to yet another user (3^{rd} receiver, so i=3 at this point), creating third active token 308. The user holding token 305 also does a purchase which is as a qualifying event, so that the second user (receiver) then owns qualifying token 309. The distribution rules will then be applied, potentially assigning an award to all users in the chain that leads directly from initial token 301 to qualifying token 309.

The second user to receive the initial token, holding first active token 303 does nothing with it. The chain ends there.

The third user to receive the initial token, holding first active token 304 performs a qualifying purchase, so that he/she ends up with qualifying token 306 and also sends the first active token 304 to another user, creating second active token 307. That user sends the token on to another user, who then holds third active token 310. At that point, the chain also ends.

Figure 4 focuses on the evolution of data content within a token, specifically detailing the components of campaign information 102 and transaction log 103. Campaign information includes the seller 102a, the scope of the campaign 102b, base distribution rules 102c, and specific percentage rewards for various users (102d and onwards), along with a signature 102e and a hash 102f to ensure data integrity. The transaction log contains detailed records of transactions, including transaction IDs 103a, recipient and sender identifiers 103b and 103c, and hash 103d for the transaction, as well as information on previous transactions (103e to 103j). This detailed record-keeping facilitates the accurate and secure execution of the campaign's distribution rules. The qualifying event information includes the base currency (104a), the base value (104b), the qualifying event time (104c), the signature (104d) and the hash (104e). The payout information includes a confirmation that payout has taken place (105a), the time of the payout (105b) and the hash (105c).

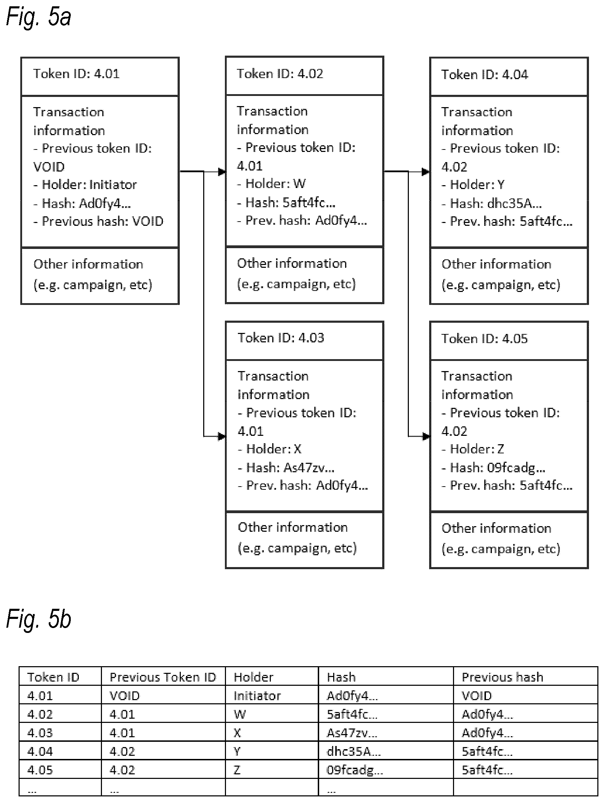

Figure 5a and 5b schematically represent the role of the transaction data in a system, for an embodiment containing the minimal transaction data. Figure 5a shows a simplified depiction of the role of transaction data within the system, emphasizing the minimal transaction data required for the system's operation, and the manner in which each "downstream" token may contain a reference to its "upstream" token. Figure 5b shows this information in tabular form.

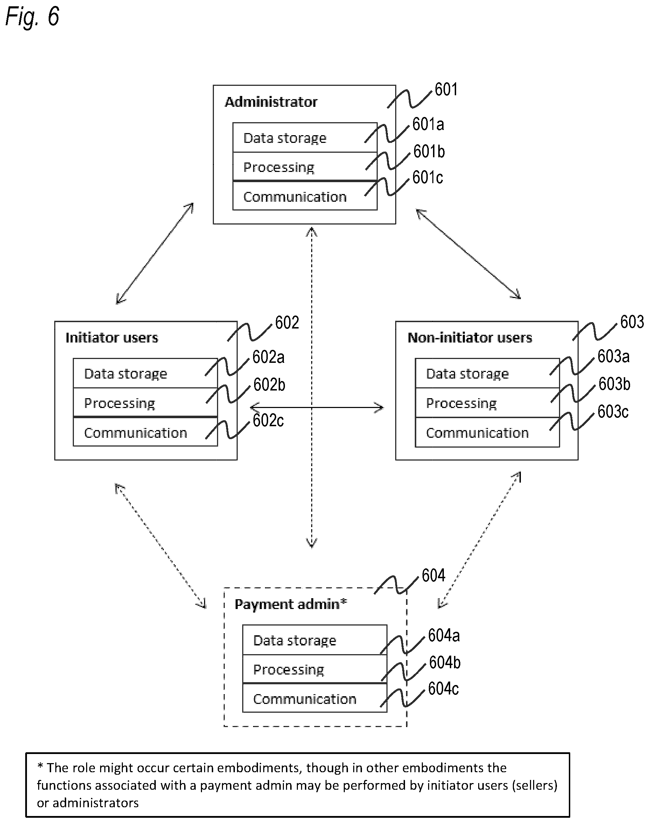

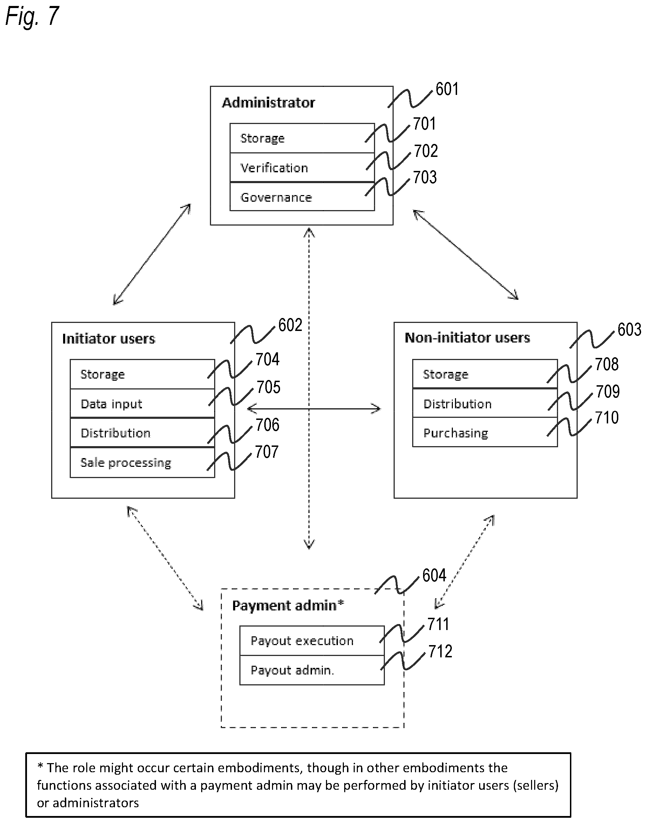

Figure 6 and Figure 7 provide simplified schematic depictions of the participants in the system along with their technical capabilities and key roles, respectively. These figures highlight the diverse functionalities and responsibilities of different participants, including administrators, initiator users, non-initiator users, and payment administrators. Each participant's capabilities in terms of data storage, processing, and communication (Figure 6) and their specific roles in the system, such as verification, governance, distribution, sale processing, and payout execution (Figure 7), are clearly delineated. These figures collectively illustrate the collaborative and interconnected nature of the system, where each participant plays a critical role in the seamless operation and execution of marketing or distribution campaigns.

In the foregoing description of the figures, the disclosure has been described with reference to specific embodiments thereof. It will, however, be evident that various modifications and changes may be made thereto without departing from the scope of the disclosure as summarized in the attached claims.

In addition, many modifications may be made to adapt a particular situation or material to the teachings of the disclosure without departing from the essential scope thereof. Therefore, it is intended that the disclosure not be limited to the particular embodiments disclosed, but that the disclosure will include all embodiments falling within the scope of the appended claims.

In particular, combinations of specific features of various aspects of the disclosure may be made. An aspect of the disclosure may be further advantageously enhanced by adding a feature that was described in relation to another aspect of the disclosure.

It is to be understood that the disclosure is limited by the annexed claims and its technical equivalents only. In this disclosure and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A computer-implemented method for processing and distributing a distribution scheme, comprising:
- creating an initial token comprising distribution rules;
- digitally signing the initial token using a token creator signature, forming a signed initial token;
- for counter i in the range 1 to n inclusive, where n can be any integer greater than or equal to 1, the method further comprises
- providing the signed initial token, if i=1, or a signed (i-1)-th active token, if i>1, to an i-th receiver;
- adding i-th receiver data to the signed initial token or the signed (i-1)th active token forming an i-th active token;
- digitally signing, using an i-th receiver signature, the i-th active token forming a signed i- th active token;
- adding qualifying event data to the signed m-th active token, where m can be any integer with 1<=m<=n forming a qualifying token;
- digitally signing the qualifying token using a token qualifier signature forming a signed qualifying token;
- verifying the token creator signature, the i-th receiver signature, and the token qualifier signature;
- in case the signatures are verified, executing the distribution rules, wherein the distribution rules determine a reward for the first to m-th receivers based on their order relative to the initial token and/or to the qualifying token.

2. The method according to claim 1, wherein the process of providing the signed token to receivers comprises duplicating the signed token wherein a sender retains the signed token while a duplicated instance is created for the receiver with updated transaction data.

3. The method according to claim 1 or 2, wherein the process of signing the qualifying token comprises duplicating the qualifying token, wherein a holder retains the qualifying token while a duplicated instance is created with updated qualifying event data.

4. The method according to any one of the preceding claims, wherein the verifying the token creator signature, the i-th receiver signature, and the token qualifier signature is performed by validating signed transactions records stored within the token itself rather than through a distributed consensus mechanism.

5. The method according to any one of the preceding claims, wherein the distribution rules determine a reward for only the (n-p)-th to n-th receiver, where p is smaller than n.

6. The method according to any one of the preceding claims, wherein the distribution rules determine a reward for only the first to q-th receiver, where q is smaller than n.

7. The method according to any one of the preceding claims, wherein the initial token comprises a reference to a dataset in a database.

8. The method according to any one of the preceding claims, wherein the qualifying event data comprises transaction data from the distribution chain including receivers in the distribution chain that are subject to the distribution rules as defined in the initial token.

9. The method according to any one of the preceding claims, further comprising:
- associating peripheral distributor data with the initial token, i-th active token, or qualifying token, wherein the peripheral distributor data provides additional context or descriptive information beneficial to parties within the system.

10. The method according to any of the preceding claims, wherein executing the distribution rules comprises:
- generating payout data and associating the payout data with the first qualifying token, thereby creating a payout token.

11. The method according to claim 10, wherein the payout data includes at least one of: a confirmation of conditions met for distribution, a delay parameter accounting for possible disputes, or instructions for the automated processing of distributions.

12. The method according to any of the preceding claims, wherein the information in the token is encrypted using a private key of the token creator, and wherein the integrity and authenticity of the token can be verified using a corresponding public key.

13. The method according to any of the preceding claims, further comprising:
- storing a cryptographic hash of the transaction data and qualifying event data in at least one administrator database, allowing for verification of the integrity and authenticity of the data contained within the token.

14. Computer program products comprising computer instructions which, when executed on a token creator device, at least one token receiver device and a token qualifier device, perform the method of any one of claims 1-13.

15. System for processing and distributing a distribution scheme comprising a token creator device, at least one token receiver device and a token qualifier device, the system configured to perform the method of any one of claims 1-13.
